# EUROPEAN PATENT APPLICATION

(11) **EP 4 109 363 A1**
(43) Date of publication of application: **28.12.2022**
(21) Application number: 22179868.9
(22) Date of filing: 20.06.2022
(51) Int. Cl.: G06Q 10/06, G06Q 10/00

(54) **TERMINAL MANAGEMENT SYSTEM**

(30) Priority: 21.06.2021 US 202117304413
(71) Applicant: Capital One Services, LLC, McLean, Virginia 22102 (US)
(72) Inventor: WALKER, Keith, McLean, 22102 (US); AGGARWAL, Karn, McLean, 22102 (US); SAHGAL, Nidhi, McLean, 22102 (US); APPLEBY, Matthew, McLean, 22102 (US)
(74) Representative: Müller-Boré & Partner Patentanwälte PartG mbB

(57) **Abstract**

In some implementations, a system may receive a record associated with an operation of the terminal. The system may determine that the operation is associated with a service involving a user of the terminal. The system may determine, based on the service and from location information in the record, a location of the terminal. The system may determine that an agent device is available in association with providing the service for the user, wherein the agent device is determined to be available based on a status of an application session of the agent device. The system may perform an action associated with the application session to enable the agent device to facilitate performance of the service for the user.

## Description

### BACKGROUND

A terminal or kiosk, such as an automated teller machine (ATM), is an electronic communication device that enables users to perform financial transactions, such as cash withdrawals, deposits, funds transfers, or account information inquiries at any time without interacting directly with a human teller. An ATM may be referred to using other names, such as an automated banking machine (ABM), a cashpoint, or a cash machine.

### SUMMARY

In some implementations, a system for managing a terminal includes one or more memories; and one or more processors, communicatively coupled to the one or more memories, configured to: maintain a record log associated with the terminal; receive, based on maintaining the record log and from the terminal, a record associated with an operation involving a user of the terminal; determine, based on a type of the operation, that the operation is associated with one or more agents providing a service for the user; determine, based on the service and from location information in the record, a location of the terminal; identify a set of agent devices that are capable of facilitating the service at the location; select, from the set of agent devices, an agent device based on a status of an application session of the agent device; and transmit, to the agent device and via the application session, a notification that identifies the operation to enable an agent associated with the agent device to perform the service for the user.

In some implementations, a non-transitory computer-readable medium storing a set of instructions includes one or more instructions that, when executed by one or more processors of a device, cause the device to: receive a record associated with an operation of a terminal; determine, based on a type of the operation, that the operation is associated with a service involving a user of the terminal; determine, based on the service and from location information in the record, a location of the terminal; identify a set of agent devices that are capable of facilitating the service at the location; select, from the set of agent devices, an agent device based on a status of an application session of the agent device; and transmit, to the agent device and via the application session, a notification that is associated with the operation.

In some implementations, a method for managing a terminal includes receiving, by a device, a record associated with an operation of the terminal; determining, by the device, that the operation is associated with a service involving a user of the terminal; determining, by the device and based on the service and from location information in the record, a location of the terminal; determining, by the device, that an agent device is available in association with providing the service for the user, wherein the agent device is determined to be available based on a status of an application session of the agent device; and performing, by the device, an action associated with the application session to enable the agent device to facilitate performance of the service for the user.

### BRIEF DESCRIPTION OF THE DRAWINGS

Figs. 1A-1C are diagrams of an example implementation relating to managing a terminal.
Fig. 2 is a diagram of an example environment in which systems and/or methods described herein may be implemented.
Fig. 3 is a diagram of example components of one or more devices of Fig. 2.
Fig. 4 is a flowchart of an example process relating to managing a terminal.

### DETAILED DESCRIPTION

The following detailed description of example implementations refers to the accompanying drawings. The same reference numbers in different drawings may identify the same or similar elements.

A terminal device is configured to permit customers (or users) to receive certain services in an automated manner. For example, an automated teller machine (ATM) may permit a bank customer to check, as a user of the ATM, a balance of an account, withdraw cash, deposit cash, and/or a deposit a check. A security terminal may permit a user to automatically access a secure area and/or change a password associated with entering the secure area, among other examples. In some cases, based on certain parameters or characteristics associated with a user, a user's account, a terminal, and/or activity within an environment of the terminal, the terminal may be incapable of performing a certain operation associated with a service requested by the user. In such cases, the user may desire assistance from an agent of an organization (e.g., a financial institution or security organization) that owns, operates, and/or utilizes the terminal.

As a more specific example, a terminal may detect or encounter an error (e.g., a card read error) associated with a received card (e.g., a transaction card, such as a debit card or an ATM card) of a user and/or determine a particular status of an account associated with the card that is indicative of suspicious activity (e.g., such as fraudulent activity involving stolen account information and/or a stolen transaction card). In such a case, the terminal may be configured to withhold the received card within the terminal to prevent further use of the received card (e.g., to prevent further card read errors and/or to prevent fraudulent activity). In such a case, especially if the user is an authorized user of the received card, the user may wish to have an agent provide an explanation for why the terminal is incapable of returning the received card to the user. Typically, agents associated with an organization that utilizes a terminal are performing various other activities for the organization, other than monitoring activities or user interactions with the terminal (e.g., because the terminal is automated and allows for self-service by a user). Accordingly, because the terminal is not monitored by the agent and/or the terminal may not be configured to communicate directly with an available agent, the available agent may be unaware that the user is seeking or needs assistance at the terminal with a certain operation (e.g., a received card of the user being withheld within the terminal and/or the user being incapable of receiving a certain service via the terminal, among other examples).

Some implementations described herein provide a terminal management system that is configured to monitor activity (e.g., via corresponding records and/or corresponding record logs) associated with a terminal at a service location, detect (e.g., via a certain record) that the terminal performed a certain operation that may involve an agent assisting a user at the terminal, identify an available agent to assist the user, and communicate with the agent via an agent device of the agent. For example, as described herein, the terminal management system may be communicatively coupled with an application server that hosts application sessions associated with agent devices at the service location. Statuses of the application sessions may correspond to and/or indicate statuses of corresponding agents that are logged into the application sessions. The statuses may indicate which of the agents are available, unavailable (e.g., due to an agent assisting another user via the application session, due to an agent using the application session to perform other services or tasks of the organization, and/or the like), and/or designated to assist a user with an issue at a terminal of the service location. Accordingly, based on information from the application server, the terminal management system may identify an available agent and/or notify the available agent via a corresponding application session on an agent device of the agent that a terminal performed a certain operation (and/or experienced a certain issue with a user) that may involve or require assistance from the agent. In this way, the available agent may be prompted to assist the user at the terminal.

In some implementations, the terminal management system may facilitate remote monitoring of multiple terminals (or sets of terminals) and application sessions of agent devices at multiple service locations. For example, the terminal management system may monitor multiple branches of a financial institution, one or more of which include multiple terminals and multiple agent devices associated with multiple agents that are available to assist with providing a service at one or more of the multiple terminals. In this way, the terminal management system may provide a centralized monitoring system of multiple terminals and/or centralized communication system for multiple agent devices, thereby preventing one or more of the multiple terminals from having to be individually configured to identify and communicate with an available agent at the service location that is capable of providing assistance to a user at a terminal. Furthermore, the terminal management system, as a centralized monitoring system and/or centralized communication system for multiple service locations, may prevent multiple terminal management systems from having to be individually configured at one or more of the service locations. Accordingly, the terminal management system, as described herein, may require reduced computing resources (e.g., processing resources and/or memory resources) and/or network resources (e.g., communication resources required to communicatively couple each terminal with each agent device at a service location) that may otherwise be required to configure individual terminals at multiple service locations to be communicatively coupled with available agents at corresponding service locations of the individual terminals.

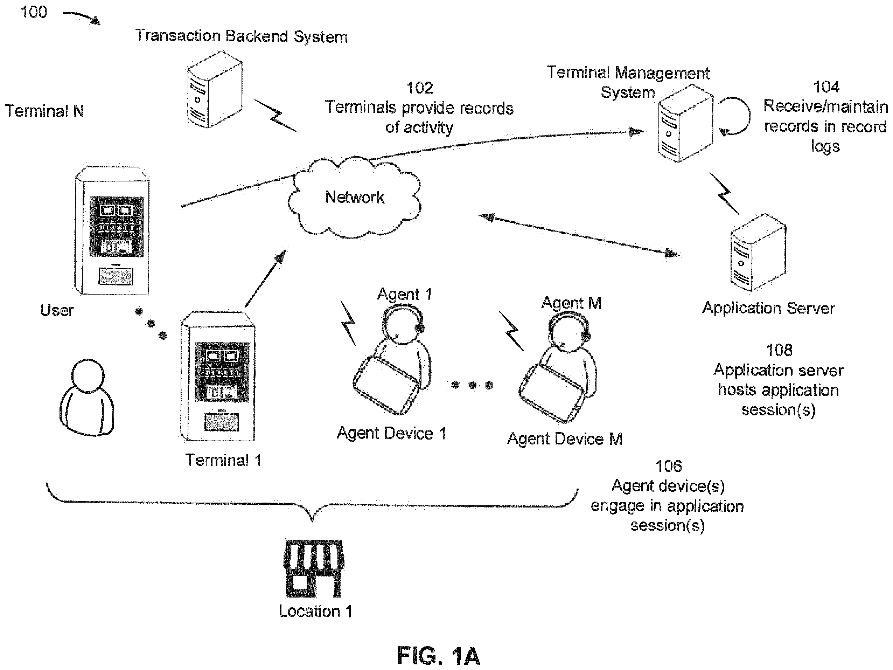

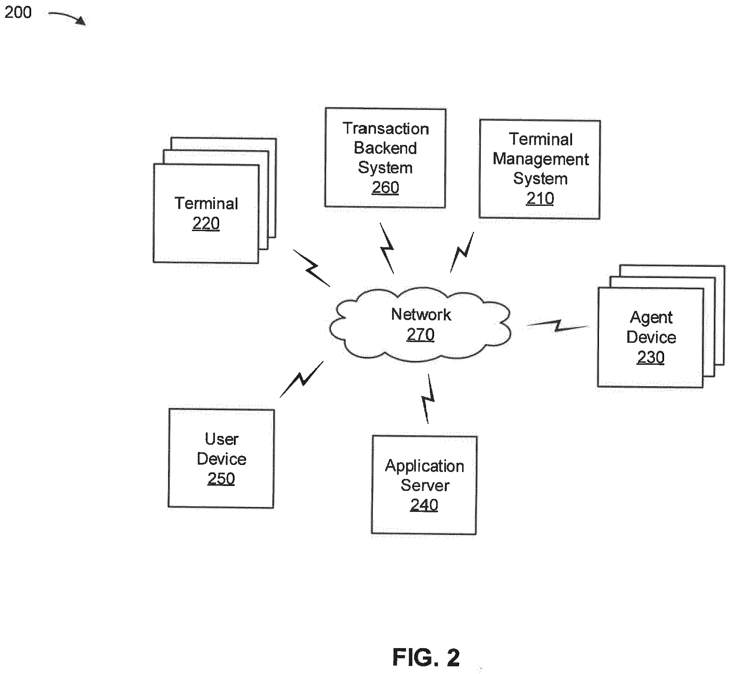

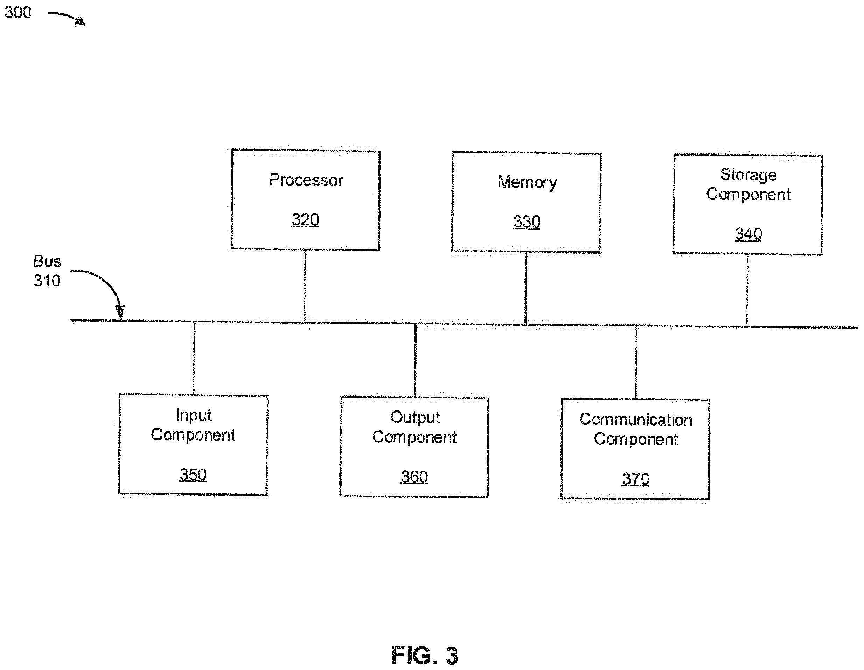

Figs. 1A-1C are diagrams of an example implementation 100 associated with managing a terminal, as described herein. As shown in Figs. 1A-1C, example implementation 100 includes a terminal management system, N terminals (shown as Terminal 1 to Terminal N), *M* agent devices associated with M agents (shown as Agent 1 to Agent M), an application server, and a transaction backend system. These devices are described in more detail below in connection with Fig. 2 and Fig. 3.

As described below, example implementation 100 may involve an in-person interaction between a user and an agent at a service location (Location 1) associated with a service provider. An agent may be a representative (e.g., a customer service representative, a manager, and/or an executive) of the service provider, and the service provider may be any entity (e.g., individual or organization) that is configured to provide a service to the user.

Although example implementation 100 is described in connection with a service associated with a transaction-based terminal (e.g., an ATM), certain operations that are specific to a transaction-based terminal, or an agent being a representative of a financial institution, one or more examples described in connection with Figs. 1A-1C may similarly apply to other types of terminals, other types of operations of the terminals, and/or other types of institutions (e.g., shopping or retail services associated with a retail business, storage or inventory services associated with a logistics business, shipping or delivery services associated with a transportation business, among other examples).

As shown in Fig. 1A, and by reference number 102, one or more of the terminals provide records to the terminal management system. For example, one or more of the terminals of example implementation 100 may be configured to provide a record to the terminal management system based on the terminal performing an operation (e.g., an operation involving a received card for a transaction via the transaction backend system). The record may be generated by a terminal based on information that is processed in association with the operation.

For example, the record may be generated to include user information of a user involved in an interaction at the terminal (e.g., an account number of the user, a name of the user, or other identification information associated with the user), terminal information (e.g., a terminal identifier, location information that identifies a location of the terminal, a type of the terminal, and/or other information associated with the terminal), and/or operation information (e.g., information that identifies a type of the operation, such as a transaction operation, an error operation, a control operation, and/or an update operation, among other examples).

The operation may correspond to any suitable operation that is performed by the terminal. For example, the operation may include processing received information from a user, processing received information from a received card (e.g., a transaction card that is inserted into the terminal by the user), and/or communicating transaction information (e.g., information associated with a transaction involving a transaction card) associated with the user and/or the terminal to the transaction backend system. In some implementations, the operation may be associated with an error associated with processing information associated with the user, the received card, and/or the transaction information.

In this way, a terminal may be configured to provide records to the terminal management system to permit the terminal management system to monitor activity (e.g., operations performed by the terminal) based on information in the records.

As further shown in Fig. 1A, and by reference number 104, the terminal management system receives and maintains the records from the terminals in respective record logs. The terminal management system may receive a record from a terminal based on the terminal management system being configured to maintain the record in a record log (e.g., within a data structure of a storage device associated with the terminal management system) associated with the terminal. As described herein, for an individual terminal (or, in some cases, each terminal), the terminal management system may be configured to maintain a record log that includes records associated with corresponding operations of the respective terminal. The terminal management system may monitor activity of the terminal based on the information in the records of the record log to determine whether the terminal performed an operation that may involve or require an agent of the service location to assist a user at the terminal and/or to address an issue with the terminal (e.g., perform a repair service, a maintenance service, and/or the like).

As further shown in Fig. 1A, and by reference number 106, the agent devices engage in application sessions via the application server. The agents may be capable of providing a service at the service location (e.g., within the service location and/or within a threshold distance of the service location) via the agent devices.

An agent (or each of the agents) may be authorized, by the service provider, to provide one or more services via the agent device. For example, the agent may be authorized via a user credential that is provisioned for the agent (e.g., a user name, a password, and/or an employee identifier) and may provide the user credential to log into the application and/or initiate an application session.

The agent device may include any suitable device for providing a service, such as a user device and/or a point of sale terminal, among other examples. The application may be associated with the service provider and/or configured to enable customer service interactions with customers of the service provider.

As further shown in Fig. 1A, and by reference number 108, the application server hosts application sessions associated with the agent devices. For example, an agent (Agent 1) may provide a service via an application, associated with the application server, that is installed on an agent device (Agent Device 1) that is associated with the agent.

The agent may indicate, via the agent device and/or the application session, that the agent and/or the agent device is available to provide a service at the service location. In some implementations, the agent and/or agent device may indicate a status of the agent and/or a status of the agent device using the application session. In this way, the application server may receive information that identifies the status of the agent and/or the agent device.

In some implementations, the agent device may automatically determine and/or indicate a location of the agent and/or agent device (e.g., using a location sensor of the agent device, a network connection and/or corresponding location of a network device of the network, and/or the like). For example, the agent device may determine that the agent and/or the agent device is located at the service location and indicate, via the application session and to the application server and/or terminal management system, that the agent and/or agent device is located at the service location. In this way, the agent device and/or the agent may be associated with the service location to permit the agent to provide a service associated with a terminal and/or a user and/or to permit the terminal management system to determine that the agent is available to provide a service associated with a terminal, as described elsewhere herein.

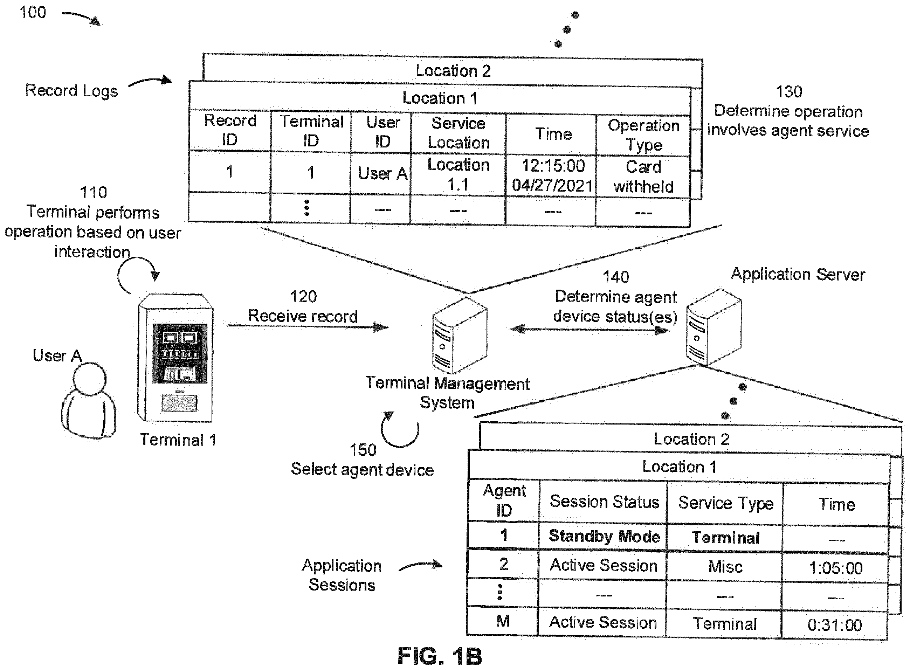

As shown in Fig. 1B, and by reference number 110, the terminal performs an operation based on a user interaction. For example, the user interaction may involve a user (User A) engaging with a terminal (Terminal 1) to perform a transaction involving the transaction backend system and/or to receive a service via the terminal. Correspondingly, the terminal operation may perform one or more operations that are based on and/or triggered by the user interaction (and/or characteristics of the user interaction). In some implementations, the terminal may determine the operation based on characteristics of the user interaction, based on characteristics of a user account associated with the user, and/or based on characteristics of a received card that is associated with the user account, and/or based on characteristics of an activity of the user (e.g., as determined or monitored via a surveillance system of the terminal).

In some implementations, the operation may involve the terminal withholding a received card (e.g., a card inserted by the user into a card reader of the terminal) within the terminal. Additionally, or alternatively, the operation may involve providing a requested service (e.g., processing a transaction via the transaction backend, providing user account information, providing access to a secure area, and/or the like) of the user.

As further shown in Fig. 1B, and by reference number 120, the terminal management system receives a record. The record may be associated with the operation and/or the user interaction. The record may include information associated with the user, the user interaction, the terminal, and/or the service location. For example, the record may identify a user identifier associated with the user, a type of the operation that is being performed, a terminal identifier associated with the terminal, a location identifier associated with the location of the terminal, and/or other information that may be monitored by the terminal management system. In this way, the terminal management system, from the record, may identify that User A engaged with Terminal 1 at Location 1.

As further shown in Fig. 1B, and by reference number 130, the terminal management system determines that the operation involves an agent service. For example, the terminal management system may be configured (e.g., using a mapping of operation types that may involve an agent providing a service associated with the terminal) to identify whether a particular operation performed by the terminal may involve (or require) an agent. Accordingly, based on an indicated type of the operation, the terminal management system may determine that the operation may involve an agent addressing the operation and/or an issue with the terminal. As shown in example implementation 100 by the operation type being "Card withheld," the terminal management system may determine that the agent is to provide, to the user at the terminal, a service that may involve a consultation regarding the received card being withheld, troubleshooting the reason that the received card was withheld, and/or addressing any other issues associated with the received card being withheld.

In some implementations, the operation type may be associated with and/or indicated as an operation that was repeated a certain quantity of times within a certain time period. For example, an operation may be associated with an incorrect personal identification number (PIN) for a received card being entered multiple times within a particular time period (which may be indicative of fraudulent activity and/or the user interaction involving a user error and/or which can be addressed by an agent greeting and/or assisting the user). Similarly, the operation may involve multiple card read errors of a received card within a particular time period (which may be indicative of an issue with the terminal and/or the received card and/or which can be addressed by the agent assisting the user via a customer service interaction).

As further shown in Fig. 1B, and by reference number 140, the terminal management system determines one or more agent device statuses. The terminal management system may identify, based on the service associated with the type of operation and the location of terminal identified in the record, a set of agent devices that are available at service location based on determining that the operation may involve a service associated with an agent. For example, as shown, the terminal management system may be configured to maintain record logs for terminals at multiple locations. Accordingly, the terminal management system may identify, via the application server, which application sessions that are being hosted by the application server involve agent devices at the service location. The terminal management system may identify the set of the agent devices based on determining that the set of agent devices are registered to the service location via respective application sessions involving individual agent devices of the set of agent devices. Accordingly, the set of agent devices may correspond to the agent devices that are involved in the application sessions at the service location.

Additionally, or alternatively, the set of agent devices may correspond to one or more agent devices that are indicating, via respective application sessions, that individual agents of the one or more agent devices are available to provide a service at the terminal. For example, the terminal management system may determine the statuses of the agent devices that are associated with the service location (e.g., the agent devices that are located at the service location and/or registered for use at the service location). The status of an agent device may be indicated via an application session associated with the agent device based on the agent entering a mode of the application session (and/or the status) and/or based on one or more agent operations that are being performed via the application session automatically setting the mode of the application session. For example, if the agent is available to assist a user with a service (e.g., a service associated with the terminal), the application session may indicate that the application session is in a standby mode. On the contrary, if the agent is unavailable to assist a user with the service, the application session may indicate that the agent is in an active mode.

In some implementations, the status may indicate whether the agent (e.g., based on a role or task of the agent that is mapped to the user credential of the agent) is available to assist with a service involving a terminal based on the agent being designated or assigned to provide one or more services involving the one or more terminals. Accordingly, the status may indicate whether the agent is preoccupied (or busy) and/or whether the agent is available (and/or designated) to assist a user at the terminal via a service associated with the type of operation (e.g., a service involving addressing the received card being withheld).

In this way, the terminal management system may identify a set of agent devices that are capable of facilitating the service at the service location and/or determine that a status of an agent associated with an agent device of the set of agent devices is available (and/or designated) to provide the service.

As further shown in Fig. 1B, and by reference number 150, the terminal management system selects an agent device. The terminal management system may access the statuses of the application sessions via the application server, as shown by a table of application sessions in Fig. 1B, for the service locations monitored by the terminal management system. Based on the statuses of the application sessions at the service location of the terminal, the terminal management system may select an agent device (Agent Device 1) that is associated with an application session that indicates that a corresponding agent is available and/or designated to provide a service for the user and/or a service associated with the terminal. More specifically, as shown, based on an application session associated with Agent 1, the terminal management system may select Agent Device 1 and/or Agent 1 (rather than Agent 2 or Agent M) to provide the service based on the application status indicating that the status of the application session is in standby mode. Additionally, or alternatively, the terminal management system may select Agent 1 (rather than Agent 2, if Agent 2 were also in standby mode) based on Agent 1 (and/or the agent device of Agent 1) being designated to provide a service associated with the terminal (as indicated by the service type for the agent being "ATM Support").

In some implementations, if the statuses of the application sessions indicate that all agents at the service location are unavailable to provide the service (e.g., immediately), the terminal management system may select or identify an agent that is most likely to be a next available agent that is capable of providing the service. For example, the terminal management system may identify and/or select a next available agent to provide a service associated with the terminal based on the status of the application session indicating a time duration that indicates that the agent is likely to complete an agent operation via the application session prior to other agents associated with other application sessions. Additionally, or alternatively, the terminal management system may continue to monitor the application sessions until a status of one of the application sessions indicates that an agent associated with an agent device of the one of the application sessions is available.

In this way, the terminal management system may select an agent device of an agent based on determining that a status of an application session associated with the agent device indicates that the agent device (and/or the agent) is designated to provide the service. Accordingly, the terminal management system may perform an action associated with the application session to enable the agent device to facilitate performance of the service for the user (e.g. via one or more agent operations).

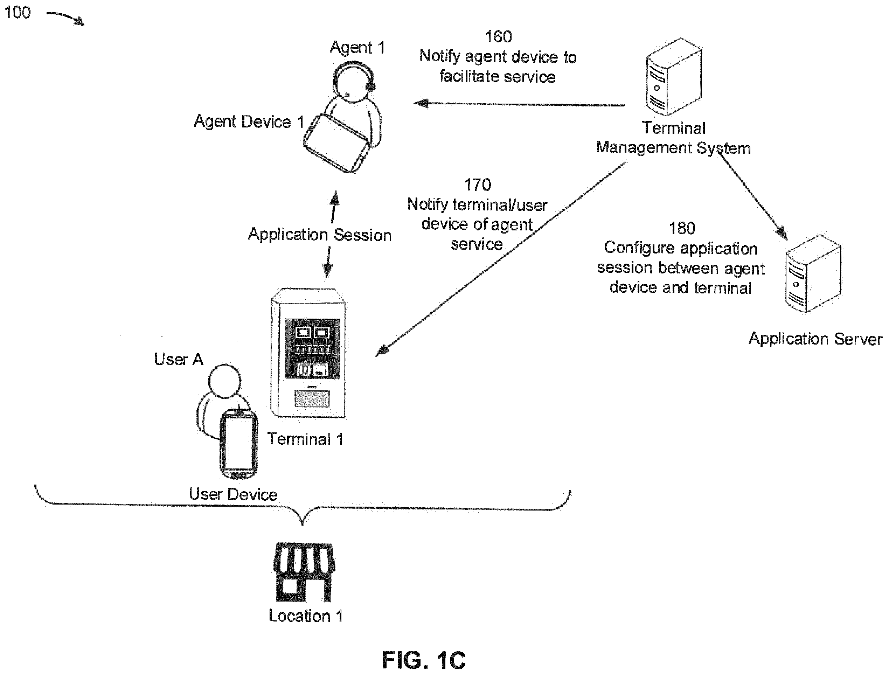

As shown in Fig. 1C, and by reference number 160, the terminal management system notifies the agent device to facilitate the service. For example, the terminal management system may transmit a notification to the agent device to alert the agent to provide the service for the user at the terminal (and/or at a location of the terminal). The notification information may include information from the record that was received from the terminal. For example, the notification may include a user identifier associated with the user (e.g., to permit the agent to identify User A), a terminal identifier associated with the terminal (e.g., to identify that Terminal 1 provided the record and/or performed the operation), a type of the operation (e.g., to indicate that the service involves the received card being withheld within the terminal), and/or a location identifier associated with the location of the terminal (e.g., to indicate that the terminal is associated with the service location), among other examples.

In some implementations, the notification may include a time period associated with the agent facilitating performance of the service. For example, the notification may determine and/or indicate the time period based on a time associated with the terminal performing the operation (e.g., a time at which Terminal 1 withheld the card of User A). The time period may correspond to a time period in which the agent should facilitate and/or provide the service to the user (e.g., to provide an improved user experience regarding the service and/or relative to the user experience associated with the operation of the terminal).

Accordingly, the terminal management system may provide the notification to indicate that a user is to receive a service in association with a terminal, as described herein.

As further shown in Fig. 1C, and by reference number 170, the terminal management system notifies the terminal and/or a user device of the user of the agent service. For example, the terminal management system may send a notification to the terminal and/or the user device that indicates that an agent is to provide a service for the user based on the operation performed by the terminal. In some implementations, the notification may include an identifier of the agent (e.g., a name and/or an agent identification number) to permit the user to identify the agent when the agent arrives to provide the service.

In some implementations, the terminal management system may transmit a notification to the terminal to indicate to the user that an agent (or a specific agent using an agent identifier, such as Agent 1) is available to provide the service for the user. Additionally, or alternatively, the terminal management system may prompt the user, via a user interface of the terminal, to indicate whether the user would like to receive an agent-based service associated with the terminal, the operation performed by the terminal, and/or the user interaction with the terminal. In some implementations, the terminal management system may provide the notification to the agent device based on the user replying to the prompt and/or indicating that the user requests the service from the agent.

Additionally, or alternatively, the terminal management system may transmit, to a user device associated with the user, a notification to indicate to the user that the agent is available to provide the service for the user. The terminal management system may identify the user device based on the user device being associated with the user account of the user. For example, the terminal management system may look-up an address (e.g., an Internet protocol address, a media access control (MAC) address, and/or the like) of the user device that is associated with and/or assigned to the user account to permit the terminal management system to communicate with the user via the user device.

As further shown in Fig. 1C, and by reference number 180, the application server configures an application session between the agent device and the terminal. For example, the terminal management system may instruct the application server to configure the application session that is associated with the agent device to involve the terminal (e.g., to permit the agent to communicate with and/or provide information to the terminal via the agent device). In this way, the terminal management system may cause, via the application server, the terminal to join the application session to facilitate, using a user interface of the terminal, communication between the agent device and the user.

Accordingly, as described herein, the terminal management system may monitor activity associated with terminals at a service location and/or agent devices at the service location to permit an agent associated with one or more of the agent devices to provide a service to a user associated with a user interaction involving one of the terminals.

As indicated above, Figs. 1A-1C are provided as an example. Other examples may differ from what is described with regard to Figs. 1A-1C. The number and arrangement of devices shown in Figs. 1A-1C are provided as an example. In practice, there may be additional devices, fewer devices, different devices, or differently arranged devices than those shown in Figs. 1A-1C. Furthermore, two or more devices shown in Figs. 1A-1C may be implemented within a single device, or a single device shown in Figs. 1A-1C may be implemented as multiple, distributed devices. Additionally, or alternatively, a set of devices (e.g., one or more devices) shown in Figs. 1A-1C may perform one or more functions described as being performed by another set of devices shown in Figs. 1A-1C.

Fig. 2 is a diagram of an example environment 200 in which systems and/or methods described herein may be implemented. As shown in Fig. 2, environment 200 may include a terminal management system 210, a terminal 220, an agent device 230, an application server 240, a user device 250, a transaction backend system 260, and a network 270. Devices of environment 200 may interconnect via wired connections, wireless connections, or a combination of wired and wireless connections.

The terminal management system 210 includes one or more devices capable of receiving, generating, storing, processing, providing, and/or routing information associated with managing a terminal, as described elsewhere herein. The terminal management system 210 may include a communication device and/or a computing device. For example, the terminal management system 210 may include a server, such as a client server, a web server, a database server, a host server, a proxy server, a virtual server (e.g., executing on computing hardware), or a server in a cloud computing system. In some implementations, the terminal management system 210 includes computing hardware used in a cloud computing environment.

The terminal 220 includes one or more devices capable of facilitating an electronic transaction. For example, the terminal 220 may include an ATM, a point-of-sale (PoS) terminal, a payment terminal (e.g., a credit card terminal, a contactless payment terminal, a mobile credit card reader, or a chip reader). In some implementations, the terminal 220 includes an access control terminal (e.g., used to control physical access to a secure area), such as an access control panel used to control an access-controlled entry (e.g., a turnstile, a door, a gate, or another physical barrier). The terminal 220 may include one or more input components and/or one or more output components to facilitate obtaining data (e.g., account information) from a transaction device (e.g., a transaction card, a mobile device executing a payment application, or the like) and/or to facilitate interaction with and/or authorization from a user (e.g., an owner, or an accountholder) of the transaction device. Example input components of the terminal 220 include a number keypad, a touchscreen, a magnetic stripe reader, a chip reader, and/or a radio frequency (RF) signal reader (e.g., a near-field communication (NFC) reader). Example output devices of terminal 220 include a display and/or a speaker.

The agent device 230 includes one or more devices capable of receiving, generating, storing, processing, and/or providing information associated with managing the terminal 220 in association with the terminal management system 210, as described elsewhere herein. The agent device 230 may include a communication device and/or a computing device. For example, the agent device 230 may include a wireless communication device, a mobile phone, a user equipment, a laptop computer, a tablet computer, a wearable communication device (e.g., a smart wristwatch, a pair of smart eyeglasses, a head mounted display, or a virtual reality headset), or a similar type of device.

The application server 240 includes one or more devices capable of receiving, generating, storing, processing, providing, and/or routing information associated with an application installed on the agent device 230, as described elsewhere herein. The application server 240 may include a communication device and/or a computing device. For example, the application server 240 may include a client server, a web server, a database server, a host server, a proxy server, a virtual server (e.g., executing on computing hardware), or a server in a cloud computing system. In some implementations, the application server 240 includes computing hardware used in a cloud computing environment.

The user device 250 includes one or more devices capable of receiving, generating, storing, processing, and/or providing information associated with an account of a user of the terminal 220, as described elsewhere herein. The user device 250 may include a communication device and/or a computing device. For example, the user device 250 may include a wireless communication device, a mobile phone, a user equipment, a tablet computer, a wearable communication device (e.g., a smart wristwatch, a pair of smart eyeglasses, a head mounted display, or a virtual reality headset), or a similar type of device.

The transaction backend system 260 includes one or more devices capable of processing, authorizing, and/or facilitating a transaction. For example, the transaction backend system 260 may include one or more servers and/or computing hardware (e.g., in a cloud computing environment or separate from a cloud computing environment) configured to receive and/or store information associated with processing an electronic transaction. The transaction backend system 260 may process a transaction, such as to approve (e.g., permit, authorize, or the like) or decline (e.g., reject, deny, or the like) the transaction and/or to complete the transaction if the transaction is approved. The transaction backend system 260 may process the transaction based on information received from a transaction terminal, such as transaction data (e.g., information that identifies a transaction amount, a merchant, a time of a transaction, a location of the transaction, or the like), account information communicated to the transaction terminal by a transaction device (e.g., a transaction card, a mobile device executing a payment application, or the like) and/or information stored by the transaction backend system 260 (e.g., for fraud detection).

The transaction backend system 260 may be associated with a financial institution (e.g., a bank, a lender, a credit card company, or a credit union) and/or may be associated with a transaction card association that authorizes a transaction and/or facilitates a transfer of funds. For example, the transaction backend system 260 may be associated with an issuing bank associated with the transaction device, an acquiring bank (or merchant bank) associated with the merchant and/or the transaction terminal, and/or a transaction card association (e.g., VISA^{®} or MASTERCARD^{®}) associated with the transaction device. Based on receiving information associated with the transaction device from the transaction terminal, one or more devices of the transaction backend system 260 may communicate to authorize a transaction and/or to transfer funds from an account associated with the transaction device to an account of an entity (e.g., a merchant) associated with the transaction terminal.

The network 270 includes one or more wired and/or wireless networks. For example, the network 270 may include a wireless wide area network (e.g., a cellular network or a public land mobile network), a local area network (e.g., a wired local area network or a wireless local area network (WLAN), such as a Wi-Fi network), a personal area network (e.g., a Bluetooth network), a near-field communication network, a telephone network, a private network, the Internet, and/or a combination of these or other types of networks. The network 270 enables communication among the devices of environment 200.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

Fig. 3 is a diagram of example components of a device 300, which may correspond to the terminal management system 210, the terminal 220, the agent device 230, the application server 240, and/or the user device 250. In some implementations, the terminal management system 210, the terminal 220, the agent device 230, the application server 240, and/or the user device 250 may include one or more devices 300 and/or one or more components of device 300. As shown in Fig. 3, device 300 may include a bus 310, a processor 320, a memory 330, a storage component 340, an input component 350, an output component 360, and a communication component 370.

Bus 310 includes a component that enables wired and/or wireless communication among the components of device 300. Processor 320 includes a central processing unit, a graphics processing unit, a microprocessor, a controller, a microcontroller, a digital signal processor, a field-programmable gate array, an application-specific integrated circuit, and/or another type of processing component. Processor 320 is implemented in hardware, firmware, or a combination of hardware and software. In some implementations, processor 320 includes one or more processors capable of being programmed to perform a function. Memory 330 includes a random access memory, a read only memory, and/or another type of memory (e.g., a flash memory, a magnetic memory, and/or an optical memory).

Storage component 340 stores information and/or software related to the operation of device 300. For example, storage component 340 may include a hard disk drive, a magnetic disk drive, an optical disk drive, a solid state disk drive, a compact disc, a digital versatile disc, and/or another type of non-transitory computer-readable medium. Input component 350 enables device 300 to receive input, such as user input and/or sensed inputs. For example, input component 350 may include a touch screen, a keyboard, a keypad, a mouse, a button, a microphone, a switch, a sensor, a global positioning system component, an accelerometer, a gyroscope, and/or an actuator. Output component 360 enables device 300 to provide output, such as via a display, a speaker, and/or one or more light-emitting diodes. Communication component 370 enables device 300 to communicate with other devices, such as via a wired connection and/or a wireless connection. For example, communication component 370 may include a receiver, a transmitter, a transceiver, a modem, a network interface card, and/or an antenna.

Device 300 may perform one or more processes described herein. For example, a non-transitory computer-readable medium (e.g., memory 330 and/or storage component 340) may store a set of instructions (e.g., one or more instructions, code, software code, and/or program code) for execution by processor 320. Processor 320 may execute the set of instructions to perform one or more processes described herein. In some implementations, execution of the set of instructions, by one or more processors 320, causes the one or more processors 320 and/or the device 300 to perform one or more processes described herein. In some implementations, hardwired circuitry may be used instead of or in combination with the instructions to perform one or more processes described herein. Thus, implementations described herein are not limited to any specific combination of hardware circuitry and software.

The number and arrangement of components shown in Fig. 3 are provided as an example. Device 300 may include additional components, fewer components, different components, or differently arranged components than those shown in Fig. 3. Additionally, or alternatively, a set of components (e.g., one or more components) of device 300 may perform one or more functions described as being performed by another set of components of device 300.

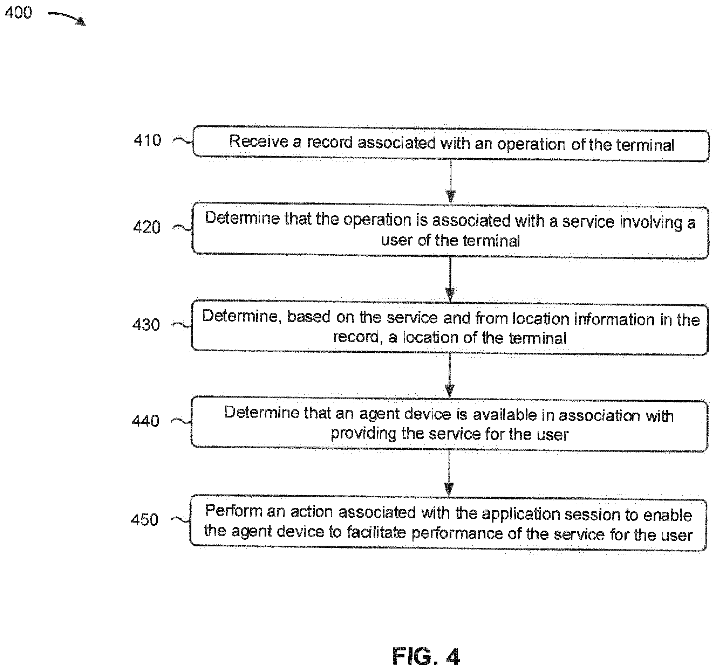

Fig. 4 is a flowchart of an example process 400 associated with managing a terminal. In some implementations, one or more process blocks of Fig. 4 may be performed by a terminal management system (e.g., the terminal management system 210). In some implementations, one or more process blocks of Fig. 4 may be performed by another device or a group of devices separate from or including the system, such as the terminal 220, the agent device 230, the application server 240, and/or the user device 250. Additionally, or alternatively, one or more process blocks of Fig. 4 may be performed by one or more components of device 300, such as processor 320, memory 330, storage component 340, input component 350, output component 360, and/or communication component 370.

As shown in Fig. 4, process 400 may include receiving a record associated with an operation of the terminal (block 410). As further shown in Fig. 4, process 400 may include determining that the operation is associated with a service involving a user of the terminal (block 420). As further shown in Fig. 4, process 400 may include determining, based on the service and from location information in the record, a location of the terminal (block 430). As further shown in Fig. 4, process 400 may include determining that an agent device is available in association with providing the service for the user, wherein the agent device is determined to be available based on a status of an application session of the agent device (block 440). As further shown in Fig. 4, process 400 may include performing an action associated with the application session to enable the agent device to facilitate performance of the service for the user (block 450).

Although Fig. 4 shows example blocks of process 400, in some implementations, process 400 may include additional blocks, fewer blocks, different blocks, or differently arranged blocks than those depicted in Fig. 4. Additionally, or alternatively, two or more of the blocks of process 400 may be performed in parallel.

The foregoing disclosure provides illustration and description, but is not intended to be exhaustive or to limit the implementations to the precise forms disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').
In view of the above, the present application discloses aspects and/or embodiments as described in the following itemized list:
1. A system for managing a terminal, the system comprising:
   one or more memories; and
   one or more processors, communicatively coupled to the one or more memories, configured to:
      maintain a record log associated with the terminal;
      receive, based on maintaining the record log and from the terminal, a record associated with an operation involving a user of the terminal;
      determine, based on a type of the operation, that the operation is associated with one or more agents providing a service for the user;
      determine, based on the service and from location information in the record, a location of the terminal;
      identify a set of agent devices that are capable of facilitating the service at the location;
      select, from the set of agent devices, an agent device based on a status of an application session of the agent device; and
      transmit, to the agent device and via the application session, a notification that identifies the operation to enable an agent associated with the agent device to perform the service for the user.
2. The system of item 1, wherein the operation involves withholding a received card within the terminal, and
   wherein the notification indicates that the service involves the received card being withheld within the terminal.
3. The system of any one of the preceding items, wherein the agent is associated with the agent device based on the agent providing a user credential to log into an application that hosts the application session.
4. The system of any one of the preceding items, wherein the one or more processors, to select the agent device, are configured to:
   determine that the status indicates that the agent is available to provide the service based on the application session being in a standby mode,
   wherein the agent device is selected based on determining that the status indicates that the application session is in the standby mode.
5. The system of any one of the preceding items, wherein the one or more processors are further configured to:
   determine, based on the status, a time period associated with the agent facilitating performance of the service,
   wherein the notification indicates the time period.
6. The system of any one of the preceding items, wherein the one or more processors are further configured to at least one of:
   transmit, to the terminal, a notification to indicate to the user that the agent is available to provide the service for the user; or
   transmit, to a user device associated with the user, a notification to indicate to the user that the agent is available to provide the service for the user.
7. The system of any one of the preceding items, wherein the one or more processors are further configured to at least one of:
   identify, from the record, a user identifier associated with the user,
   wherein the notification includes the user identifier to permit the agent to identify the user.
8. A non-transitory computer-readable medium storing a set of instructions, the set of instructions comprising:
   one or more instructions that, when executed by one or more processors of a device, cause the device to:
   receive a record associated with an operation of a terminal;
   determine, based on a type of the operation, that the operation is associated with a service involving a user of the terminal;
   determine, based on the service and from location information in the record, a location of the terminal;
   identify a set of agent devices that are capable of facilitating the service at the location;
   select, from the set of agent devices, an agent device based on a status of an application session of the agent device; and
   transmit, to the agent device and via the application session, a notification that is associated with the operation.
9. The non-transitory computer-readable medium of item 7, wherein the one or more instructions further cause the device to:
   determine that individual agent devices of the set of agent devices are registered to the location via respective application sessions of the individual agent devices,
   wherein the set of agent devices are identified based on determining that the individual agent devices are registered to the location.
10. The non-transitory computer-readable medium of any one of items 8 or 9, wherein the one or more instructions further cause the device to:
   determine that the status indicates that the agent device is in a standby mode,
   wherein the agent device is selected based on determining that the status indicates that the agent device is in the standby mode.
11. The non-transitory computer-readable medium of any one of items 8-10, wherein the one or more instructions further cause the device to:
   determine that the status indicates that the agent device is designated to provide the service,
   wherein the agent device is selected based on determining that the status indicates that the agent device is designated to provide the service.
12. The non-transitory computer-readable medium of any one of items 8-11, wherein the notification identifies at least one of:
   the type of the operation,
   a user identifier associated with the user,
   a terminal identifier associated with the terminal, or
   a location identifier associated with the location of the terminal.
13. The non-transitory computer-readable medium of any one of items 8-12, wherein the one or more instructions further cause the device to:
   identify, from the record, a terminal identifier associated with the terminal; and
   provide, within the notification, the terminal identifier to indicate that the user is to receive the service in association with the terminal.
14. The non-transitory computer-readable medium of any one of items 8-13, wherein the one or more instructions further cause the device to:
   cause the terminal to join the application session to facilitate, using a user interface of the terminal, communication between the agent device and the user.
15. A method for managing a terminal, comprising:
   receiving, by a device, a record associated with an operation of the terminal;
   determining, by the device, that the operation is associated with a service involving a user of the terminal;
   determining, by the device and based on the service and from location information in the record, a location of the terminal;
   determining, by the device, that an agent device is available in association with providing the service for the user,
      wherein the agent device is determined to be available based on a status of an application session of the agent device; and
   performing, by the device, an action associated with the application session to enable the agent device to facilitate performance of the service for the user.
16. The method of item 12, further comprising:
   prior to receiving the record, maintaining record logs for individual terminals of a plurality of terminals,
   wherein the record is received from the terminal based on the record log being one of the record logs and the terminal being one of the individual terminals.
17. The method of any one of items 15 or 16, comprising:
   determining that the status indicates that the agent device is in a standby mode,
   wherein the agent device is selected to facilitate performance of the service based on determining that the status indicates that the agent device is in the standby mode.
18. The method of any one of items 15-17, wherein performing the action comprises:
   causing the terminal to join the application session to facilitate communication between the agent device and the user.
19. The method of any one of items 15-18, wherein performing the action comprises:
   transmitting, via the application session, a notification to the agent device to alert an agent of the agent device to provide the service for the user;
   transmitting, to the terminal, a notification to indicate to the user that the agent is available to provide the service for the user; or
   transmitting, to a user device associated with the user, a notification to indicate to the user that the agent is available to provide the service for the user.
20. The method of any one of items 15-19, wherein performing the action comprises:
   identifying, from the record, a terminal identifier associated with the terminal and a user identifier associated with the user; and
   providing, via the application session and to the agent device, a notification that indicates, via the terminal identifier and the user identifier, that the user is to receive the service in association with the terminal.

## Claims

1. A system for managing a terminal, the system comprising:
one or more memories; and
one or more processors, communicatively coupled to the one or more memories, configured to:
maintain a record log associated with the terminal;
receive, based on maintaining the record log and from the terminal, a record associated with an operation involving a user of the terminal;
determine, based on a type of the operation, that the operation is associated with one or more agents providing a service for the user;
determine, based on the service and from location information in the record, a location of the terminal;
identify a set of agent devices that are capable of facilitating the service at the location;
select, from the set of agent devices, an agent device based on a status of an application session of the agent device; and
transmit, to the agent device and via the application session, a notification that identifies the operation to enable an agent associated with the agent device to perform the service for the user.

2. The system of claim 1, wherein the operation involves withholding a received card within the terminal, and
wherein the notification indicates that the service involves the received card being withheld within the terminal.

3. The system of any one of the preceding claims, wherein the agent is associated with the agent device based on the agent providing a user credential to log into an application that hosts the application session.

4. The system of any one of the preceding claims, wherein the one or more processors, to select the agent device, are configured to:
determine that the status indicates that the agent is available to provide the service based on the application session being in a standby mode,
wherein the agent device is selected based on determining that the status indicates that the application session is in the standby mode.

5. The system of any one of the preceding claims, wherein the one or more processors are further configured to:
determine, based on the status, a time period associated with the agent facilitating performance of the service,
wherein the notification indicates the time period.

6. The system of any one of the preceding claims, wherein the one or more processors are further configured to at least one of:
transmit, to the terminal, a notification to indicate to the user that the agent is available to provide the service for the user; or
transmit, to a user device associated with the user, a notification to indicate to the user that the agent is available to provide the service for the user, and/or
identify, from the record, a user identifier associated with the user,
wherein the notification includes the user identifier to permit the agent to identify the user.

7. A non-transitory computer-readable medium storing a set of instructions, the set of instructions comprising:
one or more instructions that, when executed by one or more processors of a device, cause the device to:
receive a record associated with an operation of a terminal;
determine, based on a type of the operation, that the operation is associated with a service involving a user of the terminal;
determine, based on the service and from location information in the record, a location of the terminal;
identify a set of agent devices that are capable of facilitating the service at the location;
select, from the set of agent devices, an agent device based on a status of an application session of the agent device; and
transmit, to the agent device and via the application session, a notification that is associated with the operation.

8. The non-transitory computer-readable medium of claim 7, wherein the one or more instructions further cause the device to:
determine that individual agent devices of the set of agent devices are registered to the location via respective application sessions of the individual agent devices,
wherein the set of agent devices are identified based on determining that the individual agent devices are registered to the location, and/or
determine that the status indicates that the agent device is in a standby mode,
wherein the agent device is selected based on determining that the status indicates that the agent device is in the standby mode, and/or
determine that the status indicates that the agent device is designated to provide the service,
wherein the agent device is selected based on determining that the status indicates that the agent device is designated to provide the service.

9. The non-transitory computer-readable medium of any one of claims 7 or 8, wherein the notification identifies at least one of:
the type of the operation,
a user identifier associated with the user,
a terminal identifier associated with the terminal, or
a location identifier associated with the location of the terminal.

10. The non-transitory computer-readable medium of any one of claims 7-9, wherein the one or more instructions further cause the device to:
identify, from the record, a terminal identifier associated with the terminal; and
provide, within the notification, the terminal identifier to indicate that the user is to receive the service in association with the terminal.

11. The non-transitory computer-readable medium of any one of claims 7-10, wherein the one or more instructions further cause the device to:
cause the terminal to join the application session to facilitate, using a user interface of the terminal, communication between the agent device and the user.

12. A method for managing a terminal, comprising:
receiving, by a device, a record associated with an operation of the terminal;
determining, by the device, that the operation is associated with a service involving a user of the terminal;
determining, by the device and based on the service and from location information in the record, a location of the terminal;
determining, by the device, that an agent device is available in association with providing the service for the user,
wherein the agent device is determined to be available based on a status of an application session of the agent device; and
performing, by the device, an action associated with the application session to enable the agent device to facilitate performance of the service for the user.

13. The method of claim 12, further comprising:
prior to receiving the record, maintaining record logs for individual terminals of a plurality of terminals,
wherein the record is received from the terminal based on the record log being one of the record logs and the terminal being one of the individual terminals.

14. The method of any one of claims 12 or 13, comprising:
determining that the status indicates that the agent device is in a standby mode,
wherein the agent device is selected to facilitate performance of the service based on determining that the status indicates that the agent device is in the standby mode.

15. The method of any one of claims 12-14, wherein performing the action comprises:
causing the terminal to join the application session to facilitate communication between the agent device and the user, and/or
transmitting, via the application session, a notification to the agent device to alert an agent of the agent device to provide the service for the user;
transmitting, to the terminal, a notification to indicate to the user that the agent is available to provide the service for the user; or
transmitting, to a user device associated with the user, a notification to indicate to the user that the agent is available to provide the service for the user, and/or
identifying, from the record, a terminal identifier associated with the terminal and a user identifier associated with the user; and
providing, via the application session and to the agent device, a notification that indicates, via the terminal identifier and the user identifier, that the user is to receive the service in association with the terminal.
